# EUROPÄISCHE PATENTANMELDUNG

(11) **EP 0 919 299 A2**
(43) Veröffentlichungstag der Anmeldung: **02.06.1999**
(21) Anmeldenummer: 98120733.5
(22) Anmeldetag: 31.10.1998
(51) Int. Cl.: B21C 37/08

(54) **Vorrichtung zum Abtragen einer Schweissnahtüberhöhung**

(30) Priorität: 29.11.1997 DE 19753102
(71) Anmelder: Dreistern-Werk Maschinenbau GmbH & co. KG, 79650 Schopfheim (DE)
(72) Erfinder:
(74) Vertreter: Schmitt, Hans, Dipl.-Ing.

(57) **Zusammenfassung**

An einer Vorrichtung (1) zum Abtragen einer Schweißnahtüberhöhung (2) auf der Außenseite von kontinuierlich aus einem Bandmaterial geformten und an den Bandkanten geschweißten Rohren, Profilen oder dergleichen Werkstücken (3) mittels eines spanabhebenden Werkzeugs (4, 4a, 4b) während des herstellungsbedingten Vorschubes des jeweiligen Werkstückes (3) sind zumindest zwei während des Vorschubes des Werkstückes (3) wechselweise in eine jeweilige Arbeitsposition zum Abtragen der Schweißnahtüberhöhung (2) bringbare spanabhebende Werkzeuge (4, 4a, 4b) vorgesehen. Die spanabhebenden Werkzeuge (4, 4a, 4b) sind an einem gemeinsamen Werkzeugträger (5) angeordnet, der zum wechselweisen Zustellen jeweils eines Werkzeuges (4a) in eine Arbeitsposition mit einer Positioniereinrichtung (7) verbunden ist.

## Beschreibung

Die Erfindung bezieht sich auf eine Vorrichtung zum Abtragen einer Schweißnahtüberhöhung insbesondere auf der Außenseite von kontinuierlich aus einem Bandmaterial geformten und an den Bandkanten geschweißten Rohren, Profilen oder dergleichen Werkstücken mittels eines spanabhebenden Werkzeuges während des herstellungsbedingten Vorschubs des jeweiligen Werkstückes.

Beim Längsnahtschweißen von Rohren, Profilen oder dergleichen Werkstücken wird überwiegend das Hochfrequenz-Schweißverfahren eingesetzt. Bei einem derartigen Herstellungsverfahren wird ein Bandmaterial kontinuierlich beispielsweise zu einem Rohr oder Profil geformt. Dabei werden die Bandkanten erwärmt und mittels Stauchrollen zusammengepreßt. Dadurch entsteht auf der Außen- und Innenseite des Werkstückes jeweils eine Schweißnahtüberhöhung, die auf der Außenseite spanabhebend, bevorzugt durch Hobeln, abgetragen wird.

Eine Vorrichtung der eingangs genannten Art ist beispielsweise in der DE-OS 23 01 640 beschrieben. Mit der dort beschriebenen Vorrichtung kann ein zu einem Rohr gebogenes Bandmaterial an seinen Bandkanten verschweißt werden. In Vorschubrichtung hinter der Schweißvorrichtung ist ein Abschärfmesser als spanabhebendes Werkzeug zum Abtragen der beim Verschweißen der Bandkanten auf der Außenseite des Rohres entstehenden Schweißnahtüberhöhung angeordnet.

Beim Abtragen der Schweißnahtüberhöhung wird das spanabhebende Werkzeug kontinuierlich abgenutzt. Mit einem derart abgenutzten spanabhebenden Werkzeug läßt sich die Schweißnahtüberhöhung nicht mehr optimal abtragen, was zu einer Minderung der Qualität der Oberfläche des Werkstückes führt. Das spanabhebende Werkzeug muß daher in regelmäßigen Abständen gewechselt werden.

Das Wechseln des spanabhebenden Werkzeuges erfolgt üblicherweise in der Art, daß das Werkzeug von dem Werkstück wegbewegt und von einer Bedienperson ausgetauscht wird. Dieser Wechselvorgang dauert in der Regel mehrere Minuten. Während dieser Zeit wird die Schweißnahtüberhöhung an dem Werkstück nicht abgetragen, so daß ein hoher Ausschuß an nicht bearbeiteten Werkstück-Abschnitten entsteht. Dieser Ausschuß könnte zwar vermieden werden, wenn während dem Austauschen des spanabhebenden Werkzeuges der Vorschub des Werkstückes unterbrochen würde. Dazu müßte jedoch die Produktion bei jedem Werkzeugwechsel angehalten und anschließend neu angefahren werden, was aufwendig und zeitintensiv und somit produktivitätsmindernd ist. Es ist auch möglich, eine zusätzliche Vorrichtung zum Abtragen der Schweißnahtüberhöhung vorzusehen, mit der während dem Wechsel des spanabhebenden Werkzeuges an der ersten Vorrichtung die Schweißnahtüberhöhung an dem Werkstück abgetragen wird. Eine solche zusätzliche Abtrage-Vorrichtung, die lediglich während dem Wechsel des spanabhebenden Werkzeuges der ersten Vorrichtung benötigt wird, verursacht jedoch erhebliche Kosten und konstruktiven Mehraufwand.

Ein Wechsel des spanabhebenden Werkzeuges bei kontinuierlichem Vorschub des Werkstückes birgt zudem eine erhebliche Unfallgefahr, da das Austauschen des spanabhebenden Werkzeuges in unmittelbarer Nähe des Werkstückes erfolgt, das mit hoher Geschwindigkeit vorgeschoben wird und dessen Schweißnahttemperatur mehrere 100°C betragen kann.

Es besteht deshalb die Aufgabe, eine Vorrichtung zum Abtragen einer Schweißnahtüberhöhung der eingangs genannten Art zu schaffen, bei der der Wechsel des spanabhebenden Werkzeuges in kurzer Zeit erfolgen kann, so daß auch bei kontinuierlichem Vorschub des Werkstückes praktisch kein Ausschuß durch unbearbeitete Werkstück-Abschnitte entsteht und bei der der Wechsel des spanabhebenden Werkzeuges ohne Unfallgefahr für eine Bedienperson durchgeführt werden kann.

Die erfindungsgemäße Lösung dieser Aufgabe besteht insbesondere darin, daß zumindest zwei während des Vorschubes des Werkstückes wechselweise in eine jeweilige Arbeitsposition zum Abtragen der Schweißnahtüberhöhung bringbare spanabhebende Werkzeuge vorgesehen sind. Jeweils eines der spanabhebenden Werkzeuge befindet sich in einer Arbeitsposition, in der es die Schweißnahtüberhöhung abträgt. Wenn dieses Werkzeug soweit abgenutzt ist, daß die Schweißnahtüberhöhung nicht mehr ausreichend gut abgetragen wird, wird dieses Werkzeug aus seiner Arbeitsposition in eine Ruheposition gebracht und statt dessen ein weiteres, nicht abgenutztes spanabhebendes Werkzeug in eine Arbeitsposition gebracht, das dann die Schweißnahtüberhöhung abträgt.

Da die erfindungsgemäße Vorrichtung neben einem im Eingriff befindlichen spanabhebenden Werkzeug noch ein oder mehrere außer Eingriff befindliche Werkzeuge aufweist, die mittels entsprechender Halterungen aber in Arbeitsposition bewegbar sind, während ein bisher benutztes Werkzeug lediglich außer Eingriff zu bewegen ist, kann der Werkzeug-Wechsel besonders schnell erfolgen und verlangt nicht die Demontage des abgenutzten Werkzeuges an der Stelle seiner Arbeitsposition. Vielmehr kann dieses abgenutzte Werkzeug außer Eingriff bewegt und dann zu einer beliebigen Zeit demontiert werden, während ein bisher nicht abgenutztes Werkzeug sich inzwischen im Eingriff befindet. Somit entsteht praktisch kein Ausschuß durch unbearbeitete Werkstück-Abschnitte, auch wenn der Vorschub des Werkstückes während dem Wechsel des spanabhebenden Werkzeuges kontinuierlich weiterläuft.

Außerdem kann der Wechsel des spanabhebenden Werkzeuges automatisch erfolgen, so daß zumindest im Bereich der Werkzeuge keine Bedienperson nötig ist. Die Unfallgefahr ist dadurch reduziert. Erst wenn alle an der Vorrichtung angeordneten spanabhebenden Werkzeuge abgenutzt sind, müssen diese ausgetauscht werden. Dies kann beispielsweise in einer Produktionspause erfolgen, so daß für die die spanabhebenden Werkzeuge austauschende Bedienperson keine Unfallgefahr durch den Vorschub des Werkstückes besteht. Je mehr spanabhebende Werkzeuge an der Vorrichtung vorgesehen sind, desto größer ist die Zeitspanne, nach der die Gesamtzahl der Werkzeuge ausgetauscht werden muß.

Es ist sogar möglich, das jeweils aus seiner Arbeitsposition in die Ruheposition gebrachte spanabhebende Werkzeug, während es sich in dieser Ruheposition befindet, auszutauschen oder gegebenenfalls nachzuschleifen, wodurch ein kontinuierlicher Betrieb der erfindungsgemäßen Vorrichtung über einen längeren Zeitraum auch mit einer geringen Anzahl von spanabhebenden Werkzeugen, beispielsweise auch mit nur zwei Werkzeugen, möglich ist.

Es ist vorteilhaft, wenn die spanabhebenden Werkzeuge an einem gemeinsamen Werkzeugträger angeordnet sind, der zum wechselweise Zustellen jeweils eines der Werkzeuge in eine Arbeitsposition mit einer Positioniereinrichtung verbunden ist. Der Wechsel des spanabhebenden Werkzeuges ist so besonders einfach durchführbar. Wenn das abgenutzte spanabhebende Werkzeug aus seiner Arbeitsposition in eine Ruheposition bewegt wird, so wird dadurch gleichzeitig ein weiteres Werkzeug aus einer Ruheposition in seine Arbeitsposition zum Abtragen der Schweißnahtüberhöhung gebracht. Zum Positionieren des Werkzeugträgers genügt dabei eine einzige gemeinsame Positioniereinrichtung.

Besonders zweckmäßig ist es, wenn der Werkzeugträger als Drehkopf ausgebildet ist und wenn die spanabhebenden Werkzeuge an dem Drehkopf entlang einer konzentrisch um die Drehachse des Drehkopfes verlaufenden Kreisbahnen angeordnet sind. Der Wechsel des spanabhebenden Werkzeuges beziehungsweise das Zustellen jeweils eines neuen Werkzeuges in eine Arbeitsposition kann so durch eine einfache Drehbewegung des Drehkopfes erfolgen. Der konstruktive Aufwand für die Positioniereinrichtung ist somit reduziert. Trotzdem ist eine präzise Zustellung jeweils eines spanabhebenden Werkzeugs in eine Arbeitsposition möglich.

Es ist zudem zweckmäßig, wenn die Positioniereinrichtung einen Hub- und Drehantrieb zum wechselweise Zustellen jeweils eines der spanabhebenden Werkzeuge in eine Arbeitsposition aufweist. Das sich in Arbeitsposition befindende spanabhebende Werkzeug kann dann zum Wechsel des Werkzeuges zunächst von dem Werkstück durch eine Hubbewegung beabstandet werden und anschließend kann durch eine Drehbewegung und anschließende, der Hubbewegung entgegengesetzte Zustellbewegung des Werkzeugträgers das nächste spanabhebende Werkzeug in Arbeitsposition gebracht werden. Die spanabhebenden Werkzeuge sind so während der Drehbewegung des Werkzeugträgers von dem Werkstück beabstandet, so daß eine Beschädigung der Oberfläche des Werkstückes während dem Werkzeug-Wechsel vermieden ist.

Eine besonders günstige Ausführungsform sieht dabei vor, daß der Drehkopf mittels des Hub- und Drehantriebs zwischen einer ersten Hubposition, in der jeweils eines der an dem Drehkopf angeordneten spanabhebenden Werkzeuge an das zu bearbeitende Werkstück angenähert ist und dieses beaufschlagt und einer zweiten Hubposition, in der dieses spanabhebende Werkzeug von dem Werkstück beabstandet ist, verstellbar ist und daß der Drehkopf in der zweiten Hubposition zur Zustellung eines anderen der an dem Drehkopf angeordneten spanabhebenden Werkzeuge an das Werkstück mittels des Hub- und Drehantriebs um seine Drehachse drehbar ist.

Dabei kann die Drehachse des Drehkopfes quer zur Vorschubrichtung des Werkstückes orientiert sein.

Es ist zudem zweckmäßig, wenn das jeweilige, sich in Arbeitsposition befindliche spanabhebende Werkzeug das Werkstück auf seiner oberen Seite beaufschlagt und wenn die Hubrichtung des Hub- und Drehantriebes vertikal orientiert ist. Das abgenutzte spanabhebende Werkzeug beziehungsweise der gesamte Werkzeugträger kann dann zum Wechsel des spanabhebenden Werkzeuges angehoben werden, bevor durch Drehung des Werkzeugträgers die Zustellung des nächsten spanabhebenden Werkzeuges erfolgt. Anschließend wird dieses neue spanabhebende Werkzeug beziehungsweise der Werkzeugträger abgesenkt, bis das neue Werkzeug das Werkstück oberseitig beaufschlagt und so die Schweißnahtüberhöhung mit dem neuen Werkzeug abgetragen werden kann.

Eine konstruktiv und für die Handhabung günstige Ausführungsform kann dabei darin bestehen, daß die Drehachse des Drehkopfes vertikal orientiert ist. Sind sowohl die Hubrichtung des Hub- und Drehantriebes als auch die Drehachse des Drehkopfes vertikal orientiert, so ist die Konstruktion des Hub- und Drehantriebes vereinfacht, da Hub- und Drehachse zusammenfallen können. Beispielsweise kann der Hub- und Drehantrieb durch einen Hub- und Drehzylinder gebildet sein, dessen Kolbenstange einerseits für eine Hub- und andererseits für eine Drehbewegung ausgebildet ist. Der Hub- und Drehantrieb läßt sich so besonders platzsparend konstruieren. Außerdem kann das Werkstück auf einer unterhalb des Werkstückes angeordneten Werkstück-Führung aufliegen und wird dabei trotz der oberseitigen Beaufschlagung durch das spanabhebende Werkzeug nicht aus dieser Position bewegt. Es ist gegebenenfalls sogar möglich, das spanabhebende Werkzeug mit einer dosierbaren Kraft an das Werkstück anzudrücken und dabei auch den Werkstoff des Werkstückes entsprechend zu berücksichtigen.

Es kann zweckmäßig sein, wenn die Positioniereinrichtung eine Einstellspindel zum automatischen oder manuellen Justieren des Abstandes des jeweiligen spanabhebenden Werkzeugs von der Oberfläche des Werkstückes in der ersten Hubposition des Hub- und Drehantriebes aufweist. Bei zunehmender Abnutzung des spanabhebenden Werkzeuges und einem damit verbundenen Nachlassen der spanabhebenden Wirkung dieses Werkzeuges kann das spanabhebende Werkzeug mit der Einstellspindel der Oberfläche des Werkstückes angenähert werden, um so dem Nachlassen der spanabhebenden Wirkung entgegenzuwirken und eine gleichbleibende Qualität der Oberfläche des Werkstückes sicherzustellen. Die Zeitspanne zwischen dem Wechsel zweier spanabhebender Werkzeuge kann so gegebenenfalls verlängert werden. Jedes einzelne spanabhebende Werkzeug kann über einen längeren Zeitraum benutzt werden, wodurch insgesamt weniger Werkzeuge benötigt und somit Kosten eingespart werden.

Um sicherzustellen, daß beim Zustellen eines neuen spanabhebenden Werkzeuges dieses Werkzeug in die richtige Arbeitsposition zum Abtragen der Schweißnahtüberhöhung gelangt, ist es vorteilhaft, wenn an dem Drehkopf mehrere, den einzelnen spanabhebenden Werkzeugen zugeordnete Aufnahmen für ein relativ zur Drehachse des Drehkopfes fest positioniertes Eingriffselement vorgesehen sind, wobei das Eingriffselement bei in Arbeitsposition befindlichem spanabhebenden Werkzeug zur Fixierung des Drehkopfes in die dem jeweiligen spanabhebenden Werkzeug zugeordnete Aufnahme eingreift. Dadurch ist sichergestellt, daß der Drehkopf beim Werkzeugwechsel um das richtige Maß gedreht wird, um das nächste spanabhebende Werkzeug zuzustellen und exakt in seine Arbeitsposition zum Abtragen der Schweißnahtüberhöhung zu bringen. Desweiteren ist verhindert, daß der Drehkopf versehentlich aus dieser Position verschwenkt wird, wodurch die Schweißnahtüberhöhung des Werkstückes nicht mehr zuverlässig abgetragen werden könnte. Das Eingriffselement kann beispielsweise eine Rastvorrichtung oder ein Indexzylinder sein.

Es kann zudem zweckmäßig sein, wenn zumindest ein Sensor zum Erfassen der Position des Werkzeugträgers vorgesehen ist. Mit dem Sensor kann kontrolliert werden, ob der Werkzeugträger beim Wechsel des spanabhebenden Werkzeuges richtig positioniert wurde und ob sich nach dem Zustellen eines neuen Werkzeuges dieses neue Werkzeug exakt in seiner Arbeitsposition zum Abtragen der Schweißnahtüberhöhung befindet. Wird ein Positionierungsfehler erkannt, so kann beispielsweise ein Signal gegeben und/oder der Vorschub des Werkstückes gestoppt werden, um unnötigen Ausschuß zu vermeiden.

Die Zustellung der spanabhebenden Werkzeuge sowie deren Positionierung wird vereinfacht, wenn einander in Zustellrichtung benachbarte spanabhebende Werkzeuge an dem Drehkopf jeweils denselben Abstand zueinander haben. Die zum Wechseln des spanabhebenden Werkzeuges erforderliche Positionierbewegung ist so für alle Werkzeuge stets dieselbe, so daß die Steuerung der Positioniereinrichtung vereinfacht ist.

Eine besonders günstige Ausführungsform sieht vor, daß an dem Drehkopf vier spanabhebende Werkzeuge angeordnet sind. Mit insgesamt vier spanabhebenden Werkzeugen läßt sich über einen ausreichenden Zeitraum die Schweißnahtüberhöhung an dem Werkstück abtragen, bevor alle Werkzeuge abgenutzt sind und ausgetauscht werden müssen. Dieser Austausch der spanabhebenden Werkzeuge kann beispielsweise in einer Produktionspause bei Anlagenstillstand erfolgen. Der Wechsel der spanabhebenden Werkzeuge kann dann ohne Zeitdruck und ohne Ausschußproduktion durchgeführt werden. Außerdem besteht bei Anlagenstillstand für die die Werkzeuge austauschende Bedienperson keine Unfallgefahr. Es ist aber auch möglich, abgenutzte Werkzeuge während der Produktion auszutauschen, weil bei einer derartigen Anzahl von Werkzeugen zumindest das dem in Eingriff befindlichen Werkzeug auf einer Durchmesserachse des Drehkopfes gegenüberliegende Werkzeug von dem Werkstück einen relativ großen Abstand einnimmt, so daß ein an dieser Stelle durchgeführter Werkzeugwechsel ebenfalls problemlos durchgeführt werden kann.

Dabei ist es zweckmäßig, wenn der Drehkopf kreuzförmig ausgebildet ist. Die spanabhebenden Werkzeuge lassen sich jeweils an den freien Enden des kreuzförmigen Drehkopfes anordnen, so daß zwei direkt benachbarte Werkzeuge jeweils denselben Abstand zueinander haben. Der Drehkopf als solches läßt sich zudem mit einem reduzierten Materialaufwand herstellen.

Das Abtragen der Schweißnahtüberhöhung kann besonders gründlich erfolgen, wenn als spanabhebendes Werkzeug jeweils ein Hobelwerkzeug vorgesehen ist. Mit einem Hobelwerkzeug läßt sich die Schweißnahtüberhöhung im Vergleich zu einem Schneid-, Schleif- oder dergleichen Werkzeug besonders gründlich und gleichmäßig abtragen. Als Hobelwerkzeug kann dabei beispielsweise ein Hobelstahl verwendet werden.

Um ein gleichmäßiges Abtragen der Schweißnahtüberhöhung sicherzustellen und somit eine gleichmäßige Oberfläche des Werkstückes zu erreichen, ist es zweckmäßig, wenn das Werkstück zumindest im Bereich des jeweiligen, das Werkstück beaufschlagenden spanabhebenden Werkzeugs zwischen und/oder auf Führungsrollen und/oder Gleitführungen geführt und von diesen gehalten ist. Das Werkstück ist von diesen Führungsrollen und/oder Gleitführungen absolut ruhig gehalten, so daß beim Vorschub des Werkstückes und beim Abtragen der Schweißnahtüberhöhung keine Vibrationen entstehen und so eine optimale Oberflächenqualität beim Abtragen der Schweißnahtüberhöhung erreicht wird.

Ein weiterführender Erfindungsgedanke kann darin bestehen, daß zumindest zwei in Vorschubrichtung voneinander beabstandete Werkzeugträger mit jeweils wenigstens zwei wahl- oder wechselweise in Arbeitsposition zustellbaren spanabhebenden Werkzeugen vorgesehen sind. Es ist möglich, an jedem der Werkzeugträger jeweils ein spanabhebendes Werkzeug in Arbeitsposition zu bringen, so daß mehrere hintereinander angeordnete Werkzeuge gleichzeitig in einer Arbeitsposition sind und das Werkstück beaufschlagen. Die Schweißnahtüberhöhung kann dadurch in wenigstens zwei Schritten abgetragen werden, indem ein sie zuerst beaufschlagendes Werkzeug nur einen Teil und das in Vorschubrichtung dahinter befindliche nächste Werkzeug einen weiteren Teil oder den Rest der Schweißnahtüberhöhung abträgt. Dies kann vor allem bei relativ großen Schweißnähten und Schweißnahtüberhöhungen günstig sein. Sind die in Vorschubrichtung hintereinander in Eingriff befindlichen spanabhebenden Werkzeuge stumpf oder abgenutzt, können sie jeweils in der erfindungsgemäßen vorbeschriebenen Weise, auch während der weiteren Produktion, gewechselt werden.

Nachstehend ist ein Ausführungsbeispiel der Erfindung anhand der Zeichnung näher beschrieben.

Es zeigt in zum Teil schematisierter Darstellung:
- Fig.1: eine teilweise im Schnitt gehaltene Frontansicht einer erfindungsgemäßen Vorrichtung zum Abtragen einer Schweißnahtüberhöhung mit einem Werkzeugträger, der mit einer Positioniereinrichtung verbunden ist sowie mit einem Rohr als Werkstück, das auf und zwischen Führungsrollen gehalten ist, wobei die Blickrichtung der Vorschubrichtung des Werkstückes entspricht,
- Fig.2: eine Seitenansicht der Vorrichtung gemäß Figur 1 und
- Fig.3: eine Draufsicht der Vorrichtung gemäß Figur 1 und 2.

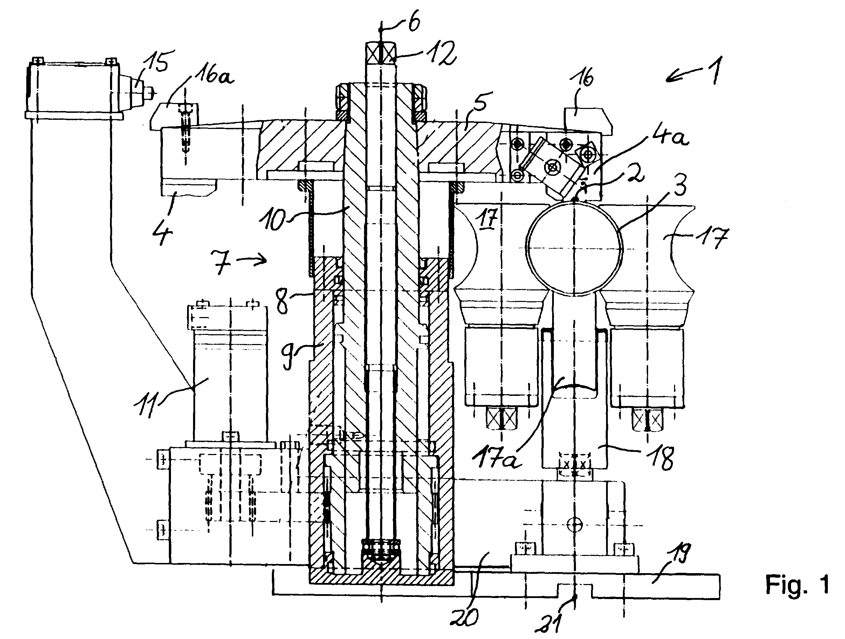

In den Figuren 1 bis 3 ist jeweils eine im ganzen mit 1 bezeichnete Vorrichtung zum Abtragen einer Schweißnahtüberhöhung 2 an geschweißten Rohren, Profilen oder dergleichen Werkstücken 3 mittels eines spanabhebenden Werkzeugs 4, 4a, 4b während des herstellungsbedingten Vorschubes des jeweiligen Werkstückes 3 dargestellt.

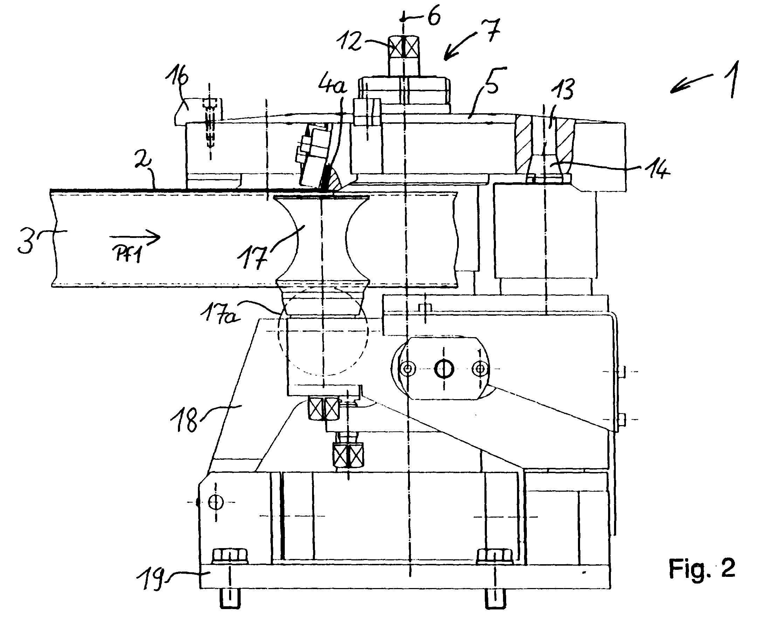

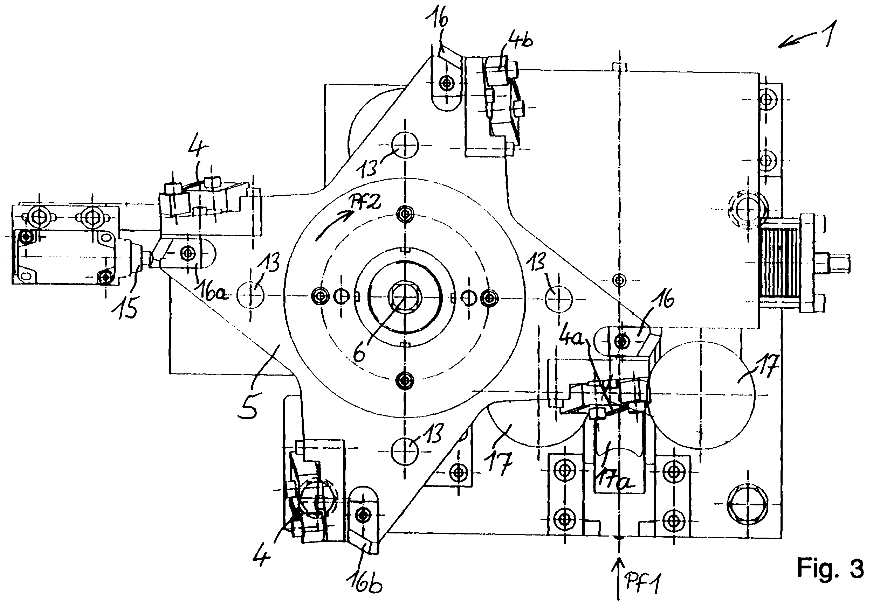

Beim Längsnahtschweißen des Werkstückes 3 entsteht eine Schweißnahtüberhöhung 2, die mit einem spanabhebenden Werkzeug 4a abgetragen wird. Das spanabhebende Werkzeug 4a wird durch das Abtragen der Schweißnahtüberhöhung 2 abgenutzt, so daß dieses regelmäßig ausgewechselt werden muß. Während dem Wechsel des Werkzeuges 4a wird die Schweißnahtüberhöhung 2 nicht abgetragen, so daß bedingt durch den fortlaufenden Vorschub des Werkstückes 3 in Richtung des Pfeiles Pf1 (Fig. 2, 3) Ausschuß durch nicht bearbeitete Abschnitte des Werkstückes 3 entsteht. In Figur 1 verläuft die Vorschubrichtung des Werkstückes 3 in die Zeichenebene hinein.

Um den Wechsel des spanabhebenden Werkzeugs 4a automatisch ablaufen zu lassen und die Zeit für den Wechsel möglichst gering zu halten, sind mehrere spanabhebende Werkzeuge 4, 4a, 4b vorgesehen, die an einem gemeinsamen Werkzeugträger 5 angeordnet sind. Ist das jeweilige, die Schweißnahtüberhöhung 2 abtragende spanabhebende Werkzeug 4a abgenutzt, so kann durch Verstellen des Werkzeugträgers 5 das nächste Werkzeuge 4b in eine Arbeitsposition zum Abtragen der Schweißnahtüberhöhung 2 zugestellt werden.

Bei der gezeigten Ausführungsform der Vorrichtung 1 ist der Werkzeugträger 5 als etwa kreuzförmiger Drehkopf ausgebildet, an dem insgesamt vier spanabhebende Werkzeuge 4, 4a, 4b entlang einer konzentrisch um die Drehachse 6 des Drehkopfes verlaufenden Kreisbahn angeordnet sind (Figur 3). Die spanabhebenden Werkzeuge 4, 4a, 4b sind Hobelstähle, mit denen die Schweißnahtüberhöhung 2 besonders gut und gründlich abgetragen werden kann. Zum Zustellen jeweils eines spanabhebenden Werkzeuges 4a in eine Arbeitsposition ist der Werkzeugträger 5 mit einer Positioniereinrichtung 7 verbunden (Figur 1). Die Positioniereinrichtung 7 weist einen Hub- und Drehantrieb 8 auf, dessen Drehachse 6 und dessen Hubrichtung zusammenfallen und vertikal orientiert sind. Das sich jeweils in Arbeitsposition befindende spanabhebende Werkzeug 4a beaufschlagt das Werkstück 3 oberseitig. Zum Auswechseln dieses spanabhebenden Werkzeuges 4a und zum Zustellen eines neuen spanabhebenden Werkzeuges 4b in die Arbeitsposition kann der Werkzeugträger 5 mit dem Hub- und Drehantrieb 8 aus dieser ersten Hubposition heraus angehoben und in eine zweite Hubposition gebracht werden, in der das abgenutzte spanabhebende Werkzeug 4a von dem Werkstück 3 beabstandet ist. In dieser zweiten Hubposition kann der Werkzeugträger 5 um seine Drehachse 6 in Drehrichtung (Pf2, Fig. 3) gedreht werden, um ein neues spanabhebendes Werkzeug 4b in die Arbeitsposition zuzustellen. Danach wird der Werkzeugträger 5 wieder in die erste Hubposition abgesenkt, in der das neue spanabhebende Werkzeug 4b das Werkstück 3 zur Abtragung der Schweißnahtüberhöhung 2 beaufschlagt. Durch das Anheben des Werkzeugträgers 5 beziehungsweise dem Abheben des spanabhebenden Werkzeuges 4a von dem Werkstück 3 ist vermieden, daß das Werkstück 3 beim Drehen des Werkzeugträgers 5 beschädigt wird. Der Wechsel des spanabhebenden Werkzeuges 4 mit der Positioniereinrichtung 7 kann automatisch und dadurch in kurzer Zeit, beispielsweise in wenigen Sekunden erfolgen. Dadurch fällt auch bei anhaltendem Vorschub des Werkstückes 3 nur wenig Ausschuß an. Ein Austauschen der an dem Werkzeugträger 5 angeordneten spanabhebenden Werkzeuge 4, 4a, 4b ist erst erforderlich, wenn alle vier Werkzeuge 4, 4a, 4b abgenutzt sind.

Gemäß Figur 1 ist der Hub- und Drehantrieb 8 durch einen Hub- und Drehzylinder mit einem Zylindermantel 9 und einer Kolbenstange 10 gebildet. Die Positioniereinrichtung 7 wird von einem Hydraulikmotor 11 angetrieben.

An der Positioniereinrichtung 7 ist eine Einstellspindel 12 vorgesehen, die in eine Innenhöhlung der Kolbenstange 10 eingreift und mit der die vertikale Position des Werkzeugträgers 5 justiert werden kann. Dadurch kann beispielsweise bei zunehmender Abnutzung des spanabhebenden Werkzeuges 4a dessen Position relativ zur Oberfläche des Werkstückes 3 nachjustiert werden, um eine gleichbleibende Qualität der Werkstückoberfläche beim Abtragen der Schweißnahtüberhöhung 2 sicherzustellen.

An dem Werkzeugträger 5 beziehungsweise an dem Drehkopf sind mehrere, den einzelnen spanabhebenden Werkzeugen 4, 4a, 4b zugeordnete Aufnahmen 13 für ein relativ zur Drehachse 6 des Drehkopfes fest positioniertes Eingriffselement 14 vorgesehen. In Figur 3 ist die Anordnung der Aufnahmen 13 an dem Werkzeugträger 5 erkennbar und in Figur 2 ist das Eingriffselement 14 dargestellt, das in eine der Aufnahmen 13 eingreift. Durch das Eingreifen des Eingriffselements 14 in eine der Aufnahmen 13 wird der Werkzeugträger 5 bei in Arbeitsposition befindlichem spanabhebenden Werkzeug 4a fixiert. Dadurch ist sichergestellt, daß sich das spanabhebende Werkzeug 4a stets in der richtigen Position befindet, um die Schweißnahtüberhöhung 2 gründlich abzutragen und ein versehentliches Verstellen des Werkzeugträgers 5 ist verhindert.

Zum Erfassen und zur Kontrolle der Position des Werkzeugträgers 5 ist zudem ein Sensor 15 vorgesehen (Figur 1, Figur 3). An dem Werkzeugträger 5 sind mehrere Ansteuerelemente 16, 16a, 16b für den Sensor angeordnet, wobei die Anzahl der Ansteuerelemente 16, 16a, 16b der Anzahl der spanabhebenden Werkzeuge 4, 4a, 4b entspricht. Wird zu Beginn des Werkzeugwechsels der Werkzeugträger 5 aus der ersten Hubposition in die zweite Hubposition angehoben, so wird der Sensor 15 von einem der Ansteuerelemente 16a angesteuert. Beim Drehen des Werkzeugträgers 5 um dessen Drehachse 6 gelangt dieses Ansteuerelement 16a außerhalb des Ansteuerbereiches des Sensors 15, so daß der Sensor 15 nicht mehr angesteuert wird. Wenn das nächste Ansteuerelement 16b in den Ansteuerbereich des Sensors 15 gelangt und den Sensor 15 ansteuert, befindet sich das nächste spanabhebende Werkzeug 4b in der richtigen Arbeitsposition zum Abtragen der Schweißnahtüberhöhung 2 und muß nur noch durch Absenken des Werkzeugträgers 5 in die erste Hubposition an das Werkstück 3 angenähert werden. Der Werkzeugträger 5 muß also beim Wechsel des spanabhebenden Werkzeugs 4a jeweils soweit um seine Drehachse 6 gedreht werden, bis das jeweils nächste Ansteuerelement 16b den Sensor 15 ansteuert. Somit ist eine zusätzliche Positionierhilfe gegeben, um das jeweils nächste spanabhebende Werkzeug 4b in die richtige Arbeitsposition zum Abtragen der Schweißnahtüberhöhung 2 zu bringen. Der Sensor 15 kann beispielsweise ein mechanischer, optischer oder induktiver Sensor sein.

Die Positionierung des Werkzeugträgers 5 und die Zustellung jeweils eines spanabhebenden Werkzeuges 4a in die Arbeitsposition ist auch dadurch vereinfacht, daß jeweils zwei direkt benachbarte spanabhebende Werkzeuge 4, 4a, 4b an dem Werkzeugträger 5 jeweils denselben Abstand zueinander haben. Für die Zustellung eines nächsten Werkzeuges 4b ist für alle der an dem Werkzeugträger 5 angeordneten spanabhebenden Werkzeuge 4, 4a, 4b die gleiche Positionierbewegung erforderlich, so daß die Steuerung der Positioniereinrichtung 7 vereinfacht ist.

Insbesondere in Figur 1 ist zu erkennen, daß das Werkstück 3 im Bereich des jeweiligen das Werkstück 3 beaufschlagenden spanabhebenden Werkzeugs 4a zwischen und auf Führungsrollen 17, 17a geführt und von diesen gehalten ist. Dadurch ist das Werkstück 3 besonders ruhig und vibrationsfrei gehalten und geführt, so daß die Abtragung der Schweißnahtüberhöhung 2 besonders gründlich erfolgen kann und eine hohe Oberflächenqualität des fertigen Werkstückes 3 erzielt werden kann. Figur 3 zeigt die Vorrichtung 1 ohne Werkstück 3, so daß auch die untere Führungsrolle 17a, auf der das Werkstück beim Abtragen der Schweißnahtüberhöhung 2 aufliegt, zu erkennen ist. Die untere Führungsrolle 17a kann auch als Gleitstück ausgeführt sein.

Die Führungsrollen 17, 17a sind an einer Halterung 18 angeordnet, die ihrerseits auf einem Vorrichtungsträger 19 montiert ist. Die Positioniereinrichtung 7 ist ebenfalls über ein Verbindungselement 20 mit dem Vorrichtungsträger 19 verbunden. Der Vorrichtungsträger und somit auch die Positioniereinrichtung 7 sind dabei um eine Schwenkachse 21 verschwenkbar. Durch Verschwenken der Positioniereinrichtung 7 um die Schwenkachse 21 läßt sich die Lage des sich in Arbeitsposition befindenden spanabhebenden Werkzeugs 4a relativ zur Schweißnahtüberhöhung 2 des Werkstückes 3 variieren, um stets ein optimales Abtragen der Schweißnahtüberhöhung 2 sicherzustellen.

## Patentansprüche

1. Vorrichtung zum Abtragen einer Schweißnahtüberhöhung insbesondere auf der Außenseite von kontinuierlich aus einem Bandmaterial geformten und an den Bandkanten geschweißten Rohren, Profilen oder dergleichen Werkstücken mittels eines spanabhebenden Werkzeugs während des herstellungsbedingten Vorschubes des jeweiligen Werkstückes, **dadurch gekennzeichnet**, daß zumindest zwei während des Vorschubes des Werkstückes (3) wechselweise in eine jeweilige Arbeitsposition zum Abtragen der Schweißnahtüberhöhung (2) bringbare spanabhebende Werkzeuge (4, 4a, 4b) vorgesehen sind.

2. Vorrichtung nach Anspruch 1, dadurch gekennzeichnet, daß die spanabhebenden Werkzeuge (4, 4a, 4b) an einem gemeinsamen Werkzeugträger (5) angeordnet sind, der zum wechselweise Zustellen jeweils eines der Werkzeuge (4, 4a, 4b) in eine Arbeitsposition mit einer Positioniereinrichtung (7) verbunden ist.

3. Vorrichtung nach Anspruch 2, dadurch gekennzeichnet, daß der Werkzeugträger (5) als Drehkopf ausgebildet ist und daß die spanabhebenden Werkzeuge (4, 4a, 4b) an dem Drehkopf entlang einer konzentrisch um die Drehachse (6) des Drehkopfes verlaufenden Kreisbahn angeordnet sind.

4. Vorrichtung nach Anspruch 2 oder 3, dadurch gekennzeichnet, daß die Positioniereinrichtung (7) einen Hub- und Drehantrieb (8) zumwechselweise Zustellen jeweils eines der spanabhebenden Werkzeuge (4, 4a, 4b) in eine Arbeitsposition aufweist.

5. Vorrichtung nach Anspruch 4, dadurch gekennzeichnet, daß der Drehkopf mittels des Hub- und Drehantriebs (8) zwischen einer ersten Hubposition, in der jeweils eines der an dem Drehkopf angeordneten spanabhebenden Werkzeuge (4, 4a, 4b) an das zu bearbeitende Werkstück (3) angenähert ist und dieses beaufschlagt, und einer zweiten Hubposition, in der dieses spanabhebende Werkzeug von dem Werkstück (3) beabstandet ist, verstellbar ist und daß der Drehkopf in der zweiten Hubposition zur Zustellung eines anderen der an dem Drehkopf angeordneten spanabhebenden Werkzeuge (4, 4a, 4b) an das Werkstück (3) mittels des Hub- und Drehantriebs (8) um seine Drehachse (6) drehbar ist.

6. Vorrichtung nach einem der Ansprüche 3 bis 5, dadurch gekennzeichnet, daß die Drehachse (6) des Drehkopfes quer zur Vorschubrichtung (Pf1) des Werkstückes (3) orientiert ist.

7. Vorrichtung nach Anspruch 4, 5 oder 6, dadurch gekennzeichnet, daß das jeweilige, sich in Arbeitsposition befindliche spanabhebende Werkzeug (4, 4a, 4b) das Werkstück (3) auf seiner oberen Seite beaufschlagt und daß die Hubrichtung des Hub- und Drehantriebs (8) vertikal orientiert ist.

8. Vorrichtung nach Anspruch 6 oder 7, dadurch gekennzeichnet, daß die Drehachse (6) des Drehkopfes vertikal orientiert ist.

9. Vorrichtung nach einem der Ansprüche 5 bis 8, dadurch gekennzeichnet, daß die Positioniereinrichtung (7) eine Einstellspindel (12) zum automatischen oder manuellen Justieren des Abstandes des jeweiligen spanabhebenden Werkzeugs (4, 4a, 4b) von der Oberfläche des Werkstückes (3) in der ersten Hubposition des Hub- und Drehantriebes (8) aufweist.

10. Vorrichtung nach einem der Ansprüche 3 bis 9, dadurch gekennzeichnet, daß an dem Drehkopf mehrere, den einzelnen spanabhebenden Werkzeugen (4, 4a, 4b) zugeordnete Aufnahmen (13) für ein relativ zur Drehachse (6) des Drehkopfes festpositioniertes Eingriffselement (14) vorgesehen sind, wobei das Eingriffselement (14) bei in Arbeitsposition befindlichem spanabhebenden Werkzeug zur Fixierung des Drehkopfes in die dem jeweiligen spanabhebenden Werkzeug (4, 4a, 4b) zugeordnete Aufnahme (13) eingreift.

11. Vorrichtung nach einem der Ansprüche 2 bis 10, dadurch gekennzeichnet, daß zumindest ein Sensor (15) zum Erfassen der Position des Werkzeugträgers (5) vorgesehen ist.

12. Vorrichtung nach einem der Ansprüche 3 bis 11, dadurch gekennzeichnet, daß einander benachbarte spanabhebende Werkzeuge (4, 4a, 4b) an dem Drehkopf jeweils denselben Abstand zueinander haben.

13. Vorrichtung nach einem der Ansprüche 3 bis 12, dadurch gekennzeichnet, daß an dem Drehkopf vier spanabhebende Werkzeuge (4, 4a, 4b) angeordnet sind.

14. Vorrichtung nach Anspruch 13, dadurch gekennzeichnet, daß der Drehkopf kreuzförmig ausgebildet ist.

15. Vorrichtung nach einem der Ansprüche 1 bis 14, dadurch gekennzeichnet, daß als spanabhebendes Werkzeug (4, 4a, 4b) jeweils ein Hobelwerkzeug vorgesehen ist.

16. Vorrichtung nach einem der Ansprüche 1 bis 15, dadurch gekennzeichnet, daß das Werkstück (3) zumindest im Bereich des jeweiligen, das Werkstück (3) beaufschlagenden spanabhebenden Werkzeugs (4, 4a, 4b) zwischen und/oder auf Führungsrollen (17, 17a) oder Gleitführungen geführt und von diesen gehalten ist.

17. Vorrichtung nach einem der Ansprüche 2 bis 16, dadurch gekennzeichnet, daß zumindest zwei in Vorschubrichtung (Pf1) voneinander beabstandete Werkzeugträger (5) mit jeweils wenigstens zwei wahl- oder wechselweise in Arbeitsposition zustellbaren spanabhebenden Werkzeugen (4, 4a, 4b) vorgesehen sind.
